# EUROPEAN PATENT SPECIFICATION

(11) **EP 0 404 693 B1**
(45) Date of publication and mention of the grant of the patent: **08.03.1995**
(21) Application number: 90401788.6
(22) Date of filing: 22.06.1990
(51) Int. Cl.: H04N 9/31, H04N 9/73

(54) **Variable scanning frequency multi-color projector**
Farbprojektor mit veränderlicher Ablenkfrequenz
Projecteur multicolore à fréquence de balayage variable

(30) Priority: 22.06.1989 JP 160094/89
(43) Date of publication of application: 27.12.1990
(73) Proprietor: SONY CORPORATION, Tokyo (JP)
(72) Inventor: Funado, Shigeto, c/o Sony Corporation, Shinagawa-ku, Tokyo (JP)
(74) Representative: Thévenet, Jean-Bruno

(56) References cited:
- US-A- 4 573 081
- US-A- 4 701 788
- US-A- 4 748 497

## Description

The present invention relates generally to a projection type color television with a variable horizontal line scanning frequency. More specifically, the invention relates to a technology for controlling color temperature.

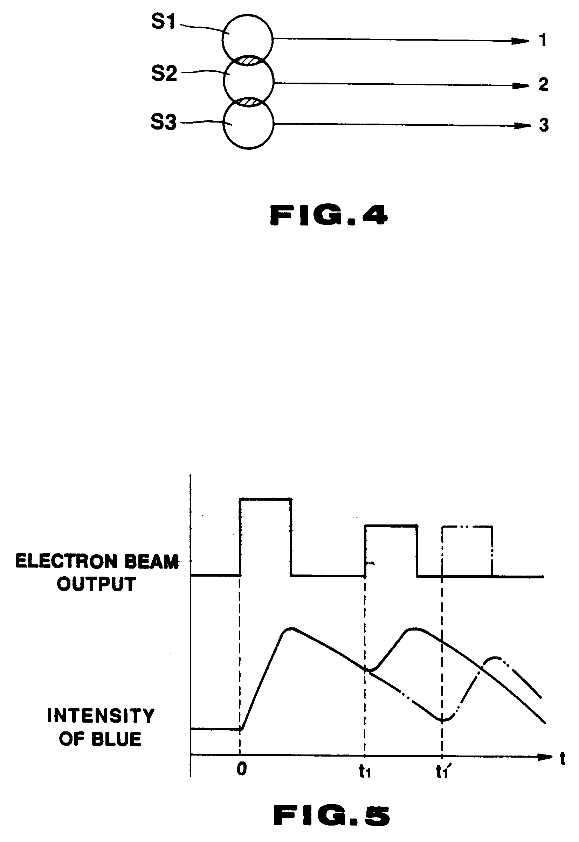

Color projections employing three color cathode ray tubes for projecting R (red), G (green), and B (blue) colors on a projecting screen in overlapping manner for forming a composite color display image are known. Such a color projector generally outputs respective R-, G-, and B-channel video signals to respective cathode ray tubes via amplifiers so that the respective cathode ray tubes each deflect the scanning beam of the respective color over horizontal scanning lines. A luminous characteristic of blue fluorescent elements is different from that of red and green fluorescent elements. Specifically, a persistence characteristic of a blue fluorescent element has a lesser emission decay time than that of the red and green fluorescent elements. For example, in the case of a fluorescent formed of a mixture of ZnS and Ag, the persistence characteristic is τ_{1/00} = several tens to several hundreds »s. However, as shown in Figure 4, beam scanning areas S₁, S₂ ... of adjacent scanning lines partly overlap as illustrated by the hatched area. The horizontal line scanning frequency is 15.75 kHz (65 »s) and the scanning period is several tens »s, for example. Since red and green fluorescent elements have persistence characteristics wherein luminance intensity decreases moderately, a variation of the horizontal line scanning frequency may not cause a significant influence over the overlapping area. However, in the case of a blue fluorescent element, because of the rapid decreasing of luminance intensity as shown in Figure 5, a variation of the horizontal scanning line frequency may cause an influence of the luminance intensity at the overlapping area. Specifically, in the example of Figure 5, the luminance intensity at a time t_{1'} becomes higher than that at a time t₁. This clearly degrades a quality of the reproduced image during a transition in variation of the horizontal line scanning frequency.

It is an object of the present invention to provide a variable scanning frequency projection type television having the capability of controlling color temperature for stable reproduction, even when the horizontal line scanning frequency is varied.

According to the invention, a variable scanning frequency multi-color projector for projecting a color video image on a display is provided as given in claim 1. Preferred embodiments are given in the dependent claims 2 - 13.

The present invention will be understood more fully from the detailed description given herein below and from the accompanying drawings of the preferred embodiment of the invention, which, however, should not be taken to limit the invention to the specific embodiment but are for explanation and understanding only.

In the drawings:
Figure 1 is a block diagram of the preferred embodiment of a variable scanning frequency projection type television according to the present invention;

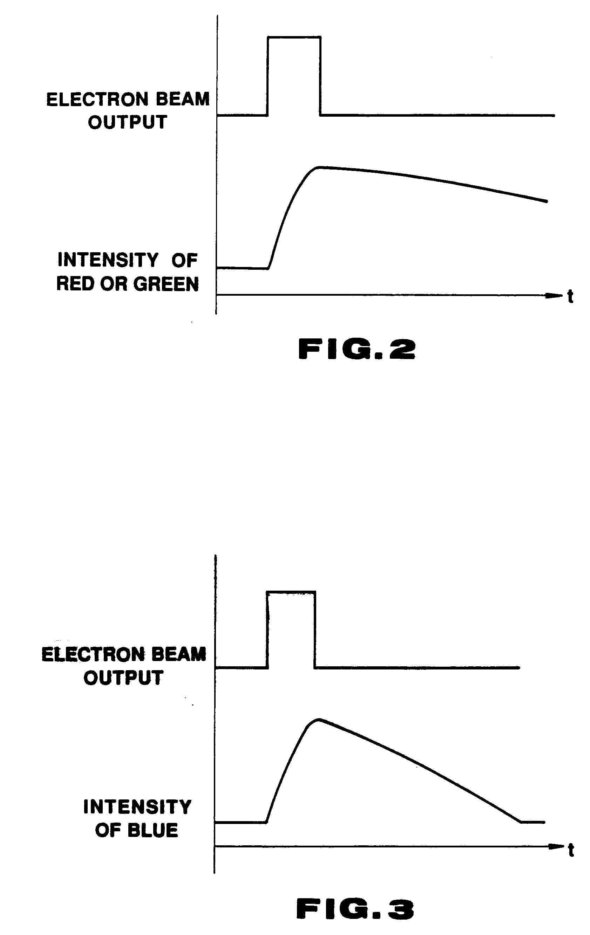

Figure 2 is a chart showing luminous characteristics of red and green fluorescent elements;
Figure 3 is a chart showing luminous characteristics of a blue fluorescent element;
Figure 4 is an explanatory illustration of scanning beams on adjacent horizontal scanning lines for showing overlapping of pixel areas; and
Figure 5 is a chart showing persistence characteristics of the blue fluorescent element during variation of a horizontal line scanning frequency.

### DESCRIPTION OF THE PREFERRED EMBODIMENT

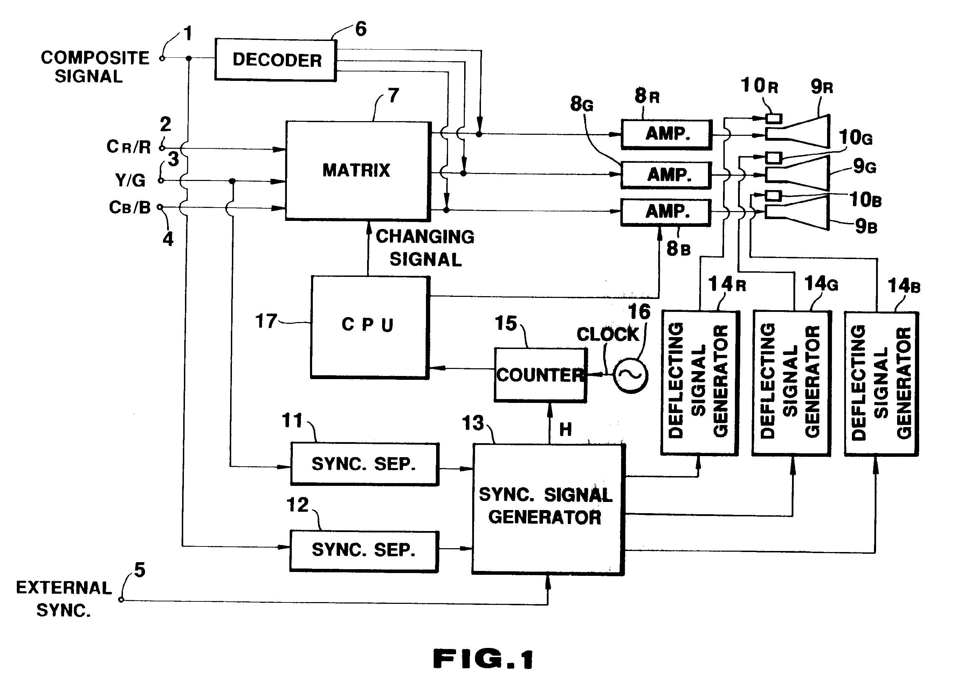

Referring now to the drawings, particularly to Figure 1, a circuit of the preferred embodiment of a projection type color television is illustrated in the form of a block diagram. A composite television signal is input via an input terminal 1. Luminance signal Y is entered through an input terminal 3. On the other hand, chroma difference signals C_{R} and C_{B} are entered via input terminals 2 and 4. The input terminals 2, 3, and 4 also serve as video signal input terminals for respectively receiving an R (red)-channel video signal, a G (green)-channel video signal, and a B (blue)-channel video signal. Another input terminal 5 is provided for accepting an external synchronizing signal. The composite signal input through the input terminal 1 is decoded into R-channel, G-channel and B-channel video signals by a decoder 6. On the other hand, the luminance signal Y and the chroma difference signals C_{R} and C_{B} are converted into R-channel, G-channel, and B-channel video signals by a matrix circuit 7. Respective color channel signals output from the matrix circuit 7 are fed to cathode ray tubes 9R, 9G, and 9B via amplifiers 8R, 8G, and 8B. Respective color channel signals from the decoder are added via summing junctions to the corresponding color channel signals from the matrix circuit 7. Deflector coils 10R, 10G, and 10B are provided for deflecting the scanning beam for periodically or cyclically changing pixels being scanned.

As is well known, the synchronizing signal is generally superimposed on the luminance signal Y or, in the alternative, on the G-channel video signal. In order to separate the synchronizing signal from the luminance signal Y or the G-channel signal, synchronizing signal separation circuits 11 and 12 are provided. The synchronizing signal separation circuit 11 is connected to the input terminal 3 to receive therethrough the luminance signal Y or the G-channel video signal on which the synchronizing signal is superimposed. The synchronizing signal separation circuit 11 feeds a separated synchronizing signal component to a synchronizing signal generator 13. The other synchronizing signal separation circuit 12 is connected to the input terminal 1 to receive therethrough the composite signal. The synchronizing signal separator 12 also supplies the separated synchronizing signal component to the synchronizing signal generator 13. The synchronizing signal generator 13 is set to a predetermined priority for selecting one of the inputs from the synchronizing signal separation circuits 11 and 12 for generating the synchronizing signal based thereon. The synchronizing signal generator circuit 13 generates R-channel, G-channel, and B-channel synchronizing signals including horizontal synchronizing signals and vertical synchronizing signals to be fed to respectively corresponding deflection signal generator circuits 14R, 14G, and 14B. The deflection signal generator circuits 14R, 14G, and 14B control the deflector coils 10R, 10G, and 10B for scanning a respective corresponding color ray beam on respective horizontal scanning lines in order that three colors are projected in overlapping manner for reproducing the input television signal.

As is well known, registration fluctuation can be adjusted by means of registration adjusters in the respective color-channel cathode ray tubes. On the other hand, distortion of the reproduced image may be corrected by correcting the outputs of the deflection signal generator circuits 14R, 14G, and 14B.

The synchronizing signal generator circuit 13 is also connected to a clock counter 15 which counts clock pulses generated by a clock generator 16. The clock counter 15 is designed to be responsive to the horizontal synchronizing signal from the synchronizing signal generator circuit 13 to output the counter value data to a central processing unit (CPU). The clock counter 15 is then reset by the next horizontal synchronizing signal. As can be appreciated, the clock counter 15 is designed to monitor the horizontal line scanning frequency to obtain a counter value corresponding to the horizontal line scanning frequency. Therefore, this counter 15 forms a horizontal line scanning frequency detecting means.

The CPU 17 is designed to supply the switching control signal for the matrix circuit 7. The CPU 17 receives the counter value data from the clock counter 15 to derive a gain data in terms of the horizontal line scanning frequency represented by the counter value data. The CPU 17 thus derives the gain data and feed to the B-channel amplifier 8B. Here it should be noted that the gain data is set in the form of a table or map or any other appropriate form in the CPU on the basis of results of experiments, and is adapted to values for maintaining luminance of reproduced blue color (color temperature) constant irrespective of the horizontal line scanning frequency. Therefore, one of a plurality of preset gain data is selected in terms of the horizontal line scanning frequency indicated by the counter value data.

It should be appreciated that, though the illustrated embodiment is designed to control only B-channel color temperature, it is possible to design the circuit for controlling not only B-channel color temperature but also R-channel and G-channel color temperatures. As can be appreciated, the CPU 17 forms variable gain/bias means for adjusting a relative gain ratio in the B-channel amplifier 8B versus the R-channel and G-channel amplifiers 8R and 8G. It is also possible to adjust both the relative gain ratio between the respective color channel amplifiers and gains of the respective amplifiers.

In operation, the television signal or video signal is selectively input through the input terminals 1 through 5. Then, respective R-channel, G-channel, and B-channel video signals are fed to associated cathode ray tubes 9R, 9G, and 9B via respective color channel amplifiers 8R, 8G, and 8B. Simultaneously, the synchronizing signal generator circuit 13 outputs synchronizing signals. The clock counter 15 counts the clock pulse from the clock pulse generator 16 during the interval between horizontal synchronizing signals for detecting the horizontal line scanning frequency to feed the horizontal line scanning frequency indicative signal to the CPU 17. The CPU 17 derives an optimal gain value of the B-channel amplifier 8B for feeding a gain control signal to the associated amplifier 8B. The B-channel amplifier 8B is responsive to the gain control signal to vary the amplifier gain to establish a gain ratio relative to the R-channel and G-channel amplifiers 8R and 8G, commanded by the gain control signal.

With the illustrated construction, the color temperature of the blue image can be adjusted in relation to that of the red and green images for successfully avoiding the influence of a variation of the horizontal line scanning frequency.

## Claims

1. A variable scanning frequency multi-color projector for projecting a color video image on a display, comprising
a plurality of cathode ray tubes (9R, 9G, 9B) respectively adapted to generate predetermined color rays to scan on said display for projecting the color video image;
deflecting means (10R, 10G, 10B) associated with each of said cathode ray tubes for deflecting said color rays for scanning on a plurality of scanning lines;
a video signal source (7) for providing respective color channel video signals in respective color channels to said cathode ray tubes on receiving a multi-color video signal containing a plurality of mutually distinct color channel signal components;
characterized in that there is further provided a scanning frequency detect (15) for monitoring the scanning period on each scanning line to produce a scanning frequency signal; and
a color temperature adjusting means (8R, 8G, 8B) in at least one color channel for adjusting the color temperature of a color ray beam generated by the corresponding cathode ray tube, said color temperature adjusting means being responsive to said scanning frequency signal so as to derive a color temperature magnitude adjusting signal based on the scanning frequency.

2. A multi-color projector as set forth in claim 1, wherein said color temperature adjusting means derives said color temperature magnitude adjusting signal for said at least one color channel so as to establish a desired color temperature ratio relative to color temperatures associated with the other color channels.

3. A multi-color projector as set forth in claim 1, wherein said color temperature adjusting means comprises an amplifier in each of the color channels, and further comprises means for performing the color temperature adjustment by adjusting the gain of the amplifier so as to establish a predetermined relative gain ratio of the amplifiers compared to one another, said predetermined relative gain ratio being variable depending upon scanning frequency.

4. A multi-color projector as set forth in claim 1, wherein said at least one color channel is the color channel for blue image reproduction.

5. A multi-color projector as set forth in claim 1, wherein said plurality of cathode ray tubes comprises first, second, and third cathode ray tubes (9R, 9G, 9B) each for projecting a different color with color rays on the display.

6. A multi-color projector as set forth in claim 5, wherein said projector is a projection television with a variable scanning frequency, and wherein said first cathode ray tube (9R) is a cathode ray tube for projecting a red ray and which has a fluorescent element;
said second cathode ray tube (9G) is a cathode ray tube for projecting a green ray and which has a fluorescent element;
said third cathode ray tube (9B) is a cathode ray tube for projecting a blue ray and which has a fluorescent element having a shorter emission decay time than fluorescent element decay times of the other cathode ray tubes;
said color temperature adjusting means comprises three amplifiers (8R, 8G, 8B) for amplifying red, green and blue channel signals respectively being input to said cathode ray tubes;
said scanning frequency detector (15) comprises a counter for counting and detecting the horizontal scanning frequency associated with said frequency deflecting signals;
said projector further comprising :
deflecting signal generator circuits (14R, 14G, 14B) for generating deflecting signals for controlling said deflecting means (10R, 10G, 10B); and
control means (17) for controlling at least one of the parameters comprising gain and bias of at least one of said three amplifiers based on the counting of said counter.

7. A projection television with variable scanning frequency as set forth in claim 6, wherein said control means (17) comprises gain control means for controlling gain of said three amplifiers based on the counting of said counter.

8. A projection television with variable scanning speed as set forth in claim 7, wherein said gain control means comprises means for setting a gain for the amplifier for the blue channel signals higher than a gain for the other amplifiers in response to an increasing deflection frequency.

9. A projection television with a variable scanning frequency, as set forth in claim 6, wherein said control means (17) comprises gain control means for controlling a gain of one of said three amplifiers based on the counting of said counter.

10. A projection television with variable scanning frequency as set forth in claim 9, wherein said one amplifier is for the blue channel signals.

11. A projection television with a variable scanning frequency, as set forth in claim 6, wherein said control means (17) comprises bias control means for controlling biases of said three amplifiers based on the counting of said counter.

12. A projection television with a variable scanning frequency, as set forth in claim 6, wherein said control means (17) comprises bias control means for controlling a bias of one of said three amplifiers based on the counting of said counter.

13. A projection television with variable scanning frequency as set forth in claim 12, wherein said one amplifier is for the blue channel signals.

## Patentansprüche

1. Mehrfarbenprojektor mit variabler Abtastfrequenz zum Projizieren eines Farbvideobildes auf eine Anzeigevorrichtung,
mit einer Mehrzahl von Kathodenstrahlröhren (9R, 9G, 9B), die jeweils zur Erzeugung vorbestimmter Farbstrahlen für das Abtasten der Anzeigevorrichtung zum Projizieren des Farbvideobildes dienen,
mit den einzelnen Kathodenstrahlröhren zugeordneten Ablenkmitteln (10R, 10G, 10B) zum Ablenken der Farbstrahlen für das Abtasten einer Mehrzahl von Abtastzeilen,
mit einer Videosignalquelle (7), die beim Empfang eines Farbvideosignals, das eine Mehrzahl von unterschiedlichen Farbkanal-Signalkomponenten enthält, in entsprechenden Farbkanälen Farbkanal-Videosignale an die Kathodenstrahlröhren liefert,
**gekennzeichnet durch**
einen Abtastfrequenzdetektor (15) zum Detektieren der Abtastperiode in den einzelnen Abtastzeilen und zur Erzeugung eines entsprechenden Abtastfrequenzsignals,
und eine Farbtemperatur-Einstelleinrichtung (8R, 8G, 8B) in wenigstens einem der Farbkanäle zur Einstellung der Farbtemperatur eines von der betreffenden Kathodenstrahlröhre erzeugten Farbstrahls, wobei diese Farbtemperatur-Einstelleinrichtung auf das genannte Abtastfrequenzsignal in der Weise reagiert, daß sie auf der Basis der Abtastfrequenz ein Signal zur Einstellung der Farbtemperatur ableitet.

2. Mehrfarbenprojektor nach Anspruch 1, bei dem die Farbtemperatur-Einstelleinrichtung das Signal zur Einstellung der Farbtemperatur für den wenigstens einen Farbkanal in der Weise ableitet, daß ein gewünschtes Verhältnis der Farbtemperatur relativ zu den Farbtemperaturen der anderen Farbkanäle festgelegt wird.

3. Mehrfarbenprojektor nach Anspruch 1, bei dem die Farbtemperatur-Einstelleinrichtung einen Verstärker in jedem der Farbkanäle aufweist sowie Mittel zum Einstellen der Farbtemperatur durch Justieren des Verstärkungsgrads des Verstärkers derart, daß ein vorbestimmtes gegenseitiges relatives Verstärkungsverhältnis der Verstärker festgelegt wird, wobei dieses vorbestimmte relative Verstärkungsverhältnis in Abhängigkeit von der Abtastfrequenz variabel ist.

4. Mehrfarbenprojektor nach Anspruch 1, bei dem der wenigstens eine Farbkanal der Farbkanal für die Wiedergabe des blauen Bildes ist.

5. Mehrfarbenprojektor nach Anspruch 1, bei dem die Mehrzahl von Kathodenstrahlröhren eine erste, eine zweite und eine dritte Kathodenstrahlröhre (9R, 9G, 9B) umfaßt, die dazu dienen, jeweils unterschiedliche Farben mit Farbstrahlen auf die Anzeigevorrichtung zu projizieren.

6. Mehrfarbenprojektor nach Anspruch 5, der ein Fernsehprojektor mit variabler Abtastfrequenz ist und bei dem
die erste Kathodenstrahlröhre (9R) eine Kathodenstrahlröhre zum Projizieren eines roten Strahls ist und ein Fluoreszenzelement besitzt,
die zweite Kathodenstrahlröhre (9G) eine Kathodenstrahlröhre zum Projizieren eines grünen Strahls ist und ein Fluoreszenzelement besitzt,
die dritte Kathodenstrahlröhre (9B) eine Kathodenstrahlröhre zum Projizieren eines blauen Strahls ist, die ein Fluoreszenzelement besitzt und deren Abklingzeit kürzer ist als die Abklingzeiten der anderen Kathodenstrahlröhren,
die Farbtemperatur-Einstelleinrichtung drei Verstärker (8R,8G, 8B) zum Verstärken des Rot-, Grün- bzw. Blaukanalsignals aufweist, die den betreffenden Kathodenstrahlröhren zugeführt werden,
der Abtastfrequenzdetektor (15) einen Zähler zum Abzählen und Detektieren der horizontalen Abtastfrequenz aufweist, die den Ablenkfrequenzsignalen zugeordnet ist,
wobei der Projektor ferner aufweist:
Ablenksignalgeneratorschaltungen (14R, 14G 14B) zur Erzeugung von Ablenksignalen für die Steuerung der Ablenkmittel (10R, 10G, 10B) und
eine Steuereinrichtung (17) zum Steuern wenigstens eines der Parameter, die den Verstärkungsgrad wenigstens eines der drei Verstärker umfassen, auf der Basis des Zählwerts des genannten Zählers.

7. Fernsehprojektor mit variabler Abtastfrequenz nach Anspruch 6, bei dem die Steuereinrichtung (17) eine Verstärkungssteuereinrichtung zum Steuern des Verstärkungsgrads der drei Verstärker auf der Basis des Zählwerts des genannten Zählers umfaßt.

8. Fernsehprojektor mit variabler Abtastfrequenz nach Anspruch 7, bei dem die Verstärkungssteuereinrichtung Mittel umfaßt, die den Verstärkungsgrad des Verstärkers für die Blaukanalsignale als Reaktion auf ein Anwachsen der Abtastfrequenz auf einen Wert einstellen, der größer ist als der Verstärkungsgrad der anderen Verstärker.

9. Fernsehprojektor mit variabler Abtastfrequenz nach Anspruch 6, bei dem die Steuereinrichtung (17) eine Verstärkungssteuereinrichtung zum Steuern des Verstärkungsgrads eines der drei Verstärker auf der Basis des Zählwerts des genannten Zählers umfaßt.

10. Fernsehprojektor mit variabler Abtastfrequenz nach Anspruch 9, bei dem der eine Verstärker der Verstärker für die Blaukanalsignale ist.

11. Fernsehprojektor mit variabler Abtastfrequenz nach Anspruch 6, bei dem die Steuereinrichtung (17) eine Vorspannungssteuereinrichtung zum Steuern der Vorspannungen der drei Verstärker auf der Basis des Zählwerts des genannten Zählers umfaßt.

12. Fernsehprojektor mit variabler Abtastfrequenz nach Anspruch 6, bei dem die Steuereinrichtung (17) eine Vorspannungssteuereinrichtung zum Steuern der Vorspannung eines der drei Verstärker auf der Basis des Zählwerts des genannten Zählers umfaßt.

13. Fernsehprojektor mit variabler Abtastfrequenz nach Anspruch 12, bei dem der eine Verstärker der Verstärker für die Blaukanalsignale ist.

## Revendications

1. Projecteur en plusieurs couleurs à fréquence de balayage variable, destiné à projeter une image vidéo en couleur sur un moyen d'affichage, comprenant:
plusieurs tubes cathodiques (9R, 9G, 9B) respectivement conçus pour produire des rayons de couleur prédéterminés afin de balayer ledit moyen d'affichage pour projeter l'image vidéo en couleur;
des moyens de déviation (10R, 10G, 10B) respectivement associés auxdits tubes cathodiques afin de dévier lesdits rayons de couleur pour qu'ils balayent plusieurs lignes de balayage;
une source de signaux vidéo (7) destinée à fournir des signaux vidéo de voies de couleur respectifs suivant des voies de couleur respectives auxdits tubes cathodiques lors de la réception d'un signal vidéo en plusieurs couleurs contenant une pluralité de composantes de signal de voies de couleur mutuellement distinctes ;
caractérisé en ce qu'il est en outre prévu un détecteur de fréquence de balayage (15) servant à contrôler la période de balayage sur chaque ligne de balayage afin de produire un signal de fréquence de balayage ; et
un moyen d'ajustement de température de couleur (8R, 8G, 8B) se trouvant dans au moins une voie de couleur et servant à ajuster la température de couleur d'un faisceau de rayons de couleur produit par le tube cathodique correspondant, ledit moyen d'ajustement de température de couleur répondant audit signal de fréquence de balayage en formant un signal d'ajustement d'amplitude de température de couleur qui est fonction de la fréquence de balayage.

2. Projecteur en plusieurs couleurs selon la revendication 1, où ledit moyen d'ajustement de température de couleur forme ledit signal d'ajustement d'amplitude de température de couleur relatif à ladite ou auxdites voies de couleur afin d'établir un rapport de température de couleur voulu par rapport aux températures de couleur associées aux autres voies de couleurs.

3. Projecteur en plusieurs couleurs selon la revendication 1, où ledit moyen d'ajustement de température de couleur comprend un amplificateur dans chacune des voies de couleur et comprend en outre un moyen permettant d'effectuer l'ajustement de température de couleur par ajustement du gain de l'amplificateur de façon à établir un rapport de gain relatif prédéterminé des amplificateurs les uns par rapport aux autres, ledit rapport de gain relatif prédéterminé variant en fonction de la fréquence de balayage.

4. Projecteur en plusieurs couleurs selon la revendication 1, où ladite au moins une voie de couleur est la voie de couleur relative à la reproduction de l'image bleue.

5. Projecteur en plusieurs couleurs selon la revendication 1, où lesdits tubes cathodiques comprennent des premier, deuxième et troisième tubes cathodiques (9R, 9G, 9B) destinés chacun à projeter une couleur différente à l'aide de rayons de couleur sur le moyen d'affichage.

6. Projecteur en plusieurs couleurs selon la revendication 5, où ledit projecteur est un téléviseur à projection qui présente une fréquence de balayage variable, et où ledit premier tube cathodique (9R) est un tube cathodique servant à projeter un rayon rouge et possédant un élément fluorescent;
le deuxième tube cathodique (9G) est un tube cathodique servant à projeter un rayon vert et possédant un élément fluorescent;
ledit troisième tube cathodique (9B) est un tube cathodique servant à projeter un rayon bleu et possédant un élément fluorescent dont le temps d'amortissement d'émission est plus court que les temps d'amortissement des éléments fluorescents des autres tubes cathodiques;
ledit moyen d'ajustement de température de couleur comprend trois amplificateurs (8R, 8G, 8B) servant à amplifier les signaux des voies rouge, verte et bleue qui sont respectivement appliqués à l'entrée desdits tubes cathodiques;
ledit détecteur de fréquence de balayage (15) comprend un compteur servant à compter et détecter la fréquence de balayage horizontal associée auxdits signaux de déviation de fréquence;
ledit projecteur comprenant en outre :
des circuits générateurs de signal de déviation (14R, 14G, 14B) servant à produire des signaux de déviation afin de commander lesdits moyens de déviation (10R, 10G, 10B); et
un moyen de commande (17) servant à commander au moins un des paramètres que constituent le gain et la polarisation d'au moins un desdits trois amplificateurs en fonction de la valeur de comptage dudit compteur.

7. Téléviseur à projection ayant une fréquence de balayage variable selon la revendication 6, où ledit moyen de commande (17) comprend un moyen de commande de gain servant à commander le gain desdits trois amplificateurs en fonction de la valeur de comptage dudit compteur.

8. Téléviseur à projection ayant une vitesse de balayage variable selon la revendication 7, où ledit moyen de commande de gain comprend un moyen servant à fixer le gain de l'amplificateur des signaux de la voie bleue à un niveau plus haut que le gain des autres amplificateurs en fonction d'une augmentation de la fréquence de déviation.

9. Téléviseur à projection ayant une fréquence de balayage variable selon la revendication 6, où ledit moyen de commande (17) comprend un moyen de commande de gain servant à commander le gain de l'un desdits trois amplificateurs en fonction de la valeur de comptage dudit compteur.

10. Téléviseur à projection ayant une fréquence de balayage variable selon la revendication 9, où ledit amplificateur est relatif aux signaux de la voie bleue.

11. Téléviseur à projection ayant une fréquence de balayage variable selon la revendication 6, où ledit moyen de commande (17) comprend un moyen de commande de polarisation servant à commander les polarisations desdits trois amplificateurs en fonction de la valeur de comptage dudit compteur.

12. Téléviseur à projection ayant une fréquence de balayage variable selon la revendication 6, où ledit moyen de commande (17) comprend un moyen de commande de polarisation servant à commander la polarisation de l'un desdits trois amplificateurs en fonction de la valeur de comptage dudit compteur.

13. Téléviseur à projection ayant une fréquence de balayage variable selon la revendication 12, où ledit amplificateur est relatif aux signaux de la voie bleue.
